# FASCICULE DE BREVET EUROPEEN

(11) **EP 2 647 479 B1**
(45) Date de publication et mention de la délivrance du brevet: **28.06.2017**
(21) Numéro de dépôt: 13161955.3
(22) Date de dépôt: 02.04.2013
(51) Int. Cl.: B29C 44/58, B29C 44/04

(54) **Procédé de moulage par injection d'un materiau plastique mousse**
Spritzgussverfahren eines Schaumkunststoffmaterials
Method for injection moulding of a foam plastic material

(30) Priorité: 04.04.2012 FR 1201000
(43) Date de publication de la demande: 09.10.2013
(73) Titulaire: Plastiques du Val de Loire, 37130 Langeais (FR)
(72) Inventeur: Hallauer, Emmanuel, 37190 Saché (FR); Manceau, Dominique, 37540 Saint Cyr sur loire (FR)
(74) Mandataire: Ipside

(56) Documents cités:
- EP-A2- 0 726 130
- WO-A1-99/43482
- CA-A1- 1 211 262
- CN-A- 101 733 907
- FR-A1- 2 166 222
- FR-A5- 2 056 576
- GB-A- 1 386 052
- US-A- 5 711 905

## Description

L'invention concerne un procédé de fabrication par moulage par injection, de pièces à base de matière plastique alvéolaire ou dite moussée.

Plus particulièrement, l'invention vise à fournir des pièces à base de matière plastique moussée dont l'aspect est esthétique en sortie de moule sans nécessiter d'étape supplémentaire de reprise d'aspect.

Depuis quelques années, afin de réduire le poids des pièces, notamment dans le domaine de l'automobile, il est connu de fabriquer ces pièces à partir d'un matériau moussé. Ce matériau moussé est une matière plastique contenant un agent gonflant ou moussant. Il peut être obtenu par différentes techniques, soit par l'introduction d'un gaz lorsque la matière plastique est fondue, soit par l'addition à la matière plastique encore solide ou une fois fondue, d'agents nucléants physiques ou chimiques ou physico-chimiques.

Un procédé de moulage par injection utilisant ce type de matériau moussé est par exemple connu sous le nom de technologie MuCell®.

Ce dernier procédé consiste à injecter dans un moule chauffé de la matière plastique fondue combinée à un gaz tel que de l'azote pour engendrer le matériau moussé. Après refroidissement, la pièce est démoulée.

Outre l'allègement procuré d'une pièce (réduction généralement de 5 à 30 % du poids par rapport à un procédé classique utilisant de la matière plastique seule), ce procédé évite l'apparition de retassures.

On connaît aussi du procédé décrit dans le brevet américain US 5711905 une technique qui utilise un moule à basse température pour des économies d'énergie, dans lequel sont injectés des granulés solides de matière plastique, la matière fondant et s'expansant dans le moule grâce à de l'injection de vapeur d'eau.

Cependant, si la pièce obtenue par ces procédés est avantageusement allégée, l'aspect de sa surface reste relativement médiocre par la présence de traces blanchâtres, formant ce qu'on nomme communément un « effet de givrage ». Or, cet aspect est visuellement rédhibitoire au regard de certaines mises en oeuvre pour lesquelles la face de la pièce visible pour l'utilisateur doit être esthétiquement uniforme. En particulier, certaines applications associées à l'habitacle des véhicules automobiles imposent des critères exigeants d'homogénéité de couleur et de brillance, auxquels ne peuvent actuellement répondre ces pièces à base de matière moussée directement obtenues par moulage.

Pour pallier cet inconvénient de défauts en surface, la pièce est généralement peinte ou bien recouverte d'un film de revêtement approprié. Ou encore, selon un autre procédé, tel que décrit dans la demande de brevet DE 10 2010 019956, une coque en matière thermodurcissable est préalablement réalisée par moulage usuel, fournissant l'aspect extérieur désiré de la pièce finale et constituant par ailleurs un moule dans lequel est injectée de la matière moussée, la coque étant concomitamment chauffée. L'ensemble est ensuite refroidi et démoulé, le matériau moussé formant le coeur de la pièce, tandis que la coque constitue le revêtement extérieur à l'aspect lisse et brillant.

Cependant, ces techniques additionnelles pour rendre aux pièces le fini attendu, ajoutent des étapes au procédé de moulage, compliquant la fabrication et augmentant les coûts de fabrication.

Un autre procédé est également décrit dans la demande de brevet CA 1 211 262. Il comprend les étapes de préparation d'une matière moussée chauffée, d'injection de la matière moussée dans un moule chauffé, de refroidissement du moule, le moule étant chauffé de façon homogène sur toute sa surface intérieure contre laquelle se plaque la matière injectée destinée à présenter la surface d'homogénéité d'aspect. Ce procédé met en avant la chauffe du moule à des températures élevées de l'ordre de 150 à 290°C, la température de la surface active du moule lors de l'injection dans le moule étant supérieure à la température de ramollissement de ladite matière. Les températures élevées du moule sont atteintes grâce au fait que l'intérieur du moule présente un revêtement métallique. Si le produit obtenu est lisse, il peut néanmoins présenter certains défauts, tels que retassures, lignes de soudure, et surtout ne supprime pas l'effet de givrage.

Dans le brevet CN 101 733 907, il est montré un procédé de moulage à partir de matière moussée, au cours duquel le vide est fait dans un moule avant injection, puis du gaz est injecté dans le moule fermé de manière hermétique, lors de la phase de propagation de la matière.

L'invention a donc pour but de proposer un procédé de fabrication par moulage à partir d'un matériau injecté sous forme moussée, sans présenter les inconvénients précités, en particulier fournissant directement après démoulage, des pièces à l'aspect fini attendu avec une surface d'homogénéité d'aspect, en particulier d'aspect brillant ou mat selon la structure de l'outillage (nature de la surface active du moule), quelle que soit la couleur (noir, blanc, gris, rouge...).

Dans la suite de la description, on entend par « homogénéité d'aspect » d'une surface, la surface de la pièce moulée en une matière moussée, qui présente l'aspect désiré en homogénéité de couleur, et/ou en brillance, et/ou en aspect de surface (surface pouvant être parfaitement lisse ou possédant une rugosité répartie uniformément), et dépourvue non seulement de retassure et de ligne de soudure, mais également d'effet de givrage.

Selon l'invention, le procédé de fabrication est caractérisé par la revendication 1 et le dispositif par la revendication 11. La surface active du moule est ainsi chauffée à une température élevée qui est supérieure à la température de ramollissement de la matière. La température de ramollissement correspond à une viscosité de la matière telle que ladite matière puisse s'écouler et se répandre dans le moule.

Si une mesure précise de la température de la surface active doit être effectuée, elle est mesurée de la manière suivante :
Le moule est ouvert et une sonde de température est apposée contre la surface active, la surface ayant été amenée à la température souhaitée sans injection de matière thermoplastique.

La température de ramollissement, qui est pour certains matériaux la température de ramollissement dite Vicat (VST), est donnée généralement par le fournisseur de la matière thermoplastique. Sa mesure est déterminée par exemple au regard de la norme ISO 306 :2004.

L'ensemble du moule pourrait être chauffé. Toutefois, afin d'économiser en énergie, seul est chauffée la partie du moule associée à la surface active en regard de la surface de la pièce devant présenter une homogénéité d'aspect.

La régulation de la température du moule se fait par des moyens de commande la température du type régulateur thermique et des moyens de mesure de la température tels qu'une ou plusieurs sondes implantées à l'intérieur de l'empreinte (coté de la ou des surfaces actives) entre les moyens de chauffage et lesdites surfaces actives. Les sondes sont étalonnées par rapport à la mesure réelle (décrite plus haut en regard de la mesure d'une température précise de la surface active).

Selon une caractéristique, la surface active du moule ne présente pas de zones dont le gradient de température avec d'autres zones de la même surface soit supérieur à 20°C, en particulier supérieure à 10°C, de préférence supérieure à 5°C.

Le gradient de température au niveau de la surface active chauffée est fonction du type de finition souhaitée et de la nature de la matière plastique injectée.

Les inventeurs ont mis en évidence, de manière inattendue, que les températures et gradients de température usuels liés au procédé de moulage par injection classique ne doivent surtout pas être appliqués pour de la matière moussée.

A titre d'exemple, une matière thermoplastique est injectée dans un moule par un procédé de moulage traditionnel, telle que sa température au moment de l'injection correspondant à la température de transformation du matériau dans le fourreau est comprise entre 180°C et 300°C, tandis que le moule est régulé à une température continue entre 60° et 120°C, associé à un gradient de température entre ladite matière injectée et la surface interne du moule de l'ordre de 60°C, voire plus.

Au contraire dans l'invention, le moule (la surface interne active du moule) est régulé à une température bien plus élevée, à savoir une température au-delà de la température de ramollissement telle que la température VST, afin que le gradient de température soit bien plus faible que celui du procédé traditionnel, de préférence inférieur à 30°C.

L'augmentation de manière significative de la température de la surface active du moule par rapport aux températures de référence mises en place dans le procédé traditionnel de moulage de matière thermoplastique engendre pour le produit moulé une surface d'aspect homogène.

En outre, de manière inattendue, le contrôle de la température de la surface active du moule combiné à une évacuation des gaz au niveau de la surface active du moule engendre un aspect de surface des pièces fabriquées ne présentant pas les défauts liés au procédé usuel, en particulier ne présentant pas d'effet de givrage.

L'augmentation significative de température du moule permet d'obtenir un gradient de température entre la matière injectée et la surface du moule bien moins important que le gradient existant par le procédé traditionnel, combinée à une évacuation des gaz au niveau de la surface active, cela engendre un effet surprenant et nullement attendu de suppression de l'effet de givrage sur la pièce moulée. Jusqu'à aujourd'hui aucun des procédés connus ne permettait de supprimer l'effet de givrage.

L'évacuation des gaz au niveau de la surface active du moule se fait en différents endroits, via des évents. Les évents présentent par exemple une largeur (dimension coplanaire avec le fond de la matrice) de l'ordre 5 à 10 mm. Les évents possèdent des dimensions telles que la matière ne peut pas s'écouler via ces évents.

L'évacuation est réalisée en regard d'au moins une zone destinée à former la ligne de jonction de deux fronts de matière injectée.

De préférence, la température de la surface active du moule lors de l'injection dans le moule est supérieure de l'ordre de 5 à 10°C à la température de ramollissement Vicat de ladite matière.

Le chauffage, au moins de la surface active du moule est obtenu par des moyens de chauffage connus, choisis isolément ou en combinaison et sans caractère limitatif, parmi, le chauffage par vapeur ou par eau chaude sur-pressée, l'induction, la haute-fréquence, les cartouches chauffantes, les résistances électriques, l'infrarouge, le laser.

De préférence, l'induction est particulièrement efficace car elle offre un contrôle pointu de la température en fournissant d'une part un chauffage extrêmement rapide et surtout homogène, et d'autre part une réaction immédiate à une baisse de la température et accompagnée d'une inertie thermique réduite.

En outre, les inventeurs ont mis en évidence, qu'au contrôle du gradient de température et de répartition homogène de la température de chauffe, et à l'évacuation des gaz au niveau de la surface active, peuvent s'ajouter de manière séparée ou associée, en fonction des matériaux de moulage et de la cadence souhaitée, d'autres étapes :
- le vide à réaliser dans le moule,
- le refroidissement rapide du moule pour maîtriser l'expansion de la matière dans le moule.

On entend par « vide », une baisse significative de la pression régnant dans le moule.

L'étape de création d'un vide à l'intérieur du moule, tel que par aspiration, est d'engendrer une pression résiduelle à l'intérieur du moule inférieure à 1 bar, de préférence comprise entre 0,2 et 0,5 bar.

Le chauffage du moule, en outre de manière homogène, participe très avantageusement à la circulation du gaz dans la matière se propageant et s'étalant dans l'empreinte du moule.

Ainsi, contrairement à l'état de la technique pour lequel le moule est hermétique lors de l'injection, le moule de l'invention nécessite des moyens d'évacuation d'une partie du gaz présent dans le matériau moussé.

L'évacuation d'une partie du gaz de la matière moussée injectée est obtenue par des moyens d'évacuation associés au moule, et principalement par des moyens agencés au moins au niveau de la surface active du moule.

Ces moyens d'évacuation sont constitués d'évents disposés dans l'épaisseur du moule communiquant d'une part avec l'intérieur du moule au niveau de la surface active et débouchant d'autre part sur l'extérieur. Ils sont de préférence agencés de manière régulière au niveau de la surface active chauffée du moule.

Les moyens d'évacuation, tels qu'un ou des évents, sont au moins disposés en regard d'au moins une zone correspondant à la ligne de jonction de deux fronts de matière, cette ligne de jonction correspondant sur le produit fini à une ligne nommée ligne de soudure.

Un évent comporte un orifice de communication avec la cavité du moule qui présente par exemple de manière non limitative des dimensions telles qu'une hauteur (dimension perpendiculaire au fond de la matrice) de l'ordre de 0,02 mm et une largeur (dimension coplanaire avec le fond de la matrice) de 5 à 10 mm.

Le nombre et la répartition des évents seront adaptés en fonction du volume de la pièce à mouler. Le dispositif comporte des moyens complémentaires d'évacuation consistant à ne pas refermer totalement le poinçon contre la matrice lors de l'injection et au début du remplissage de la matière dans l'empreinte. A cet effet, la pression exercée sur l'une des parties du moule (par exemple le poinçon mobile) est réduite, par exemple ne dépassant pas 40% de la force de fermeture imposée dans le procédé usuel de moulage, de façon que le moule s'entrouvre légèrement et ne soit pas fermé de manière hermétique lors de l'expansion de la matière en contact avec le moule chaud, le gaz pouvant s'échapper. Cette force pourra être uniforme jusqu'en fin de cycle ou elle sera augmentée en fin de cycle pour réaliser la forme finale de la pièce.

La force de fermeture durant le temps de cycle sera adaptée pour assurer le dégazage tout en fournissant une pièce dépourvue de bavure. Cette force dépendra du type de matière thermoplastique, en particulier de sa fluidité.

En outre, réaliser après injection de la matière et avant éjection de la pièce moulée, une étape d'ouverture du moule de façon à créer un espace d'ouverture au niveau du plan de joint qui est limité en épaisseur (le poinçon mobile restant parallèle à la matrice), présente d'autres avantages car on permet au matériau moussé de poursuivre son expansion. Par exemple, cela induit une augmentation d'épaisseur d'une pièce. Ou bien, pour une matière thermoplastique élastomère, cela permettra d'augmenter sa souplesse.

L'espace d'ouverture du moule sera adapté en fonction du type de matériau et des caractéristiques finales souhaitées de la pièce (notamment son épaisseur, sa densité).

Dans une autre variante des moyens d'évacuation au niveau de la surface active, la paroi du moule est formée d'un matériau microporeux.

Les moyens d'évacuation des gaz peuvent comprendre de manière combinée aux autres moyens précités du type évents, en des zones de l'empreinte du moule correspondant à des zones de fin de remplissage de la matière injectée.

Ces zones forment les dernières zones à se remplir de la matière se logeant dans l'empreinte, et sont généralement situées à l'opposé du ou des points d'injection. Elles constituent des réserves d'évacuation des impuretés de matière et d'une partie du gaz. Nommées encore masselottes, ces zones confinent une partie du gaz du matériau moussé. Elles forment après démoulage des surplus de matière qui sont cassés et jetés.

Par conséquent, ces moyens d'évacuation d'une partie des gaz au niveau de la surface active, tels des évents et/ou la constitution de la paroi d'un matériau microporeux, et éventuellement, la présence de zones de fin de remplissage dans l'empreinte du moule et/ou d'un espace d'ouverture au niveau de la ligne de joint du moule, consistent en des filtres pour l'échappement des gaz et de l'air, la matière ne pouvant s'échapper de l'empreinte du moule.

Avantageusement, le refroidissement du moule, en particulier de la surface active, est maîtrisé de façon que le matériau atteigne sa température de solidification en moins d'une minute.

Le refroidissement du moule est obtenu par des moyens usuels du type refroidissement par amenée d'eau froide dans les parois, par circulation de liquides réfrigérants ou de gaz frigorifiques, ou encore de matériaux à changement de phase.

Lorsqu'est utilisé du chauffage par induction, celui-ci permet de positionner au plus proche de la surface active les canaux de refroidissement, qui assurent alors un abaissement efficace et rapide de la température.

Avantageusement, le procédé de l'invention peut être mis en oeuvre avec tous types de matières thermoplastiques, notamment cristallins ou semi-cristallins, ou amorphes, ou composites pourvues de charges minérales du type talc ou de fibres de renforcement, ou encore des élastomères.

Les matières sont par exemple sans caractère limitatif : acrylonitrile butadiène styrène (ABS), acrylonitrile butadiène styrène / polycarbonate (ABS-PC), polypropylène (PP), polyamide (PA), polyoxyméthylène (POM), polybutylène téréphtalate (PBT).

Les applications sont très diversifiées, aussi bien des pièces pour l'automobile ou le multimédia qui utilisent plus particulièrement de l'ABS-PC, du polycarbonate (PC), du PP, polyméthacrylate de méthyle (PMMA), que pour le secteur cosmétique employant du polystyrène acrylonitrile (SAN), polyéthylène téréphtalate (PET), ABS-PC, PC, ou pour l'électroménager à partir d'ABS-PC ou de PC, ou encore pour l'électronique ou la domotique, avec de la matière du type ABS-PC, PC ou PMMA.

L'invention est également relative à un dispositif de mise en oeuvre du procédé tel que le dispositif de la revendication 11. Les moyens de chauffage sont associés nécessairement au moins à la surface active du moule. Le dispositif comporte des moyens de contrôle de la température de la surface active, du type sondes de température, et des moyens de commande des moyens de chauffage et des moyens de refroidissement contrôlables notamment par automate programmable, la température de la surface active du moule lors de l'injection dans le moule étant régulée pour être supérieure à la température de ramollissement Vicat de ladite matière injectée.

En outre, le dispositif peut comporter des moyens d'évacuation complémentaires des gaz formés par une ouverture au niveau du plan de joint du moule, le volume de cette ouverture étant fonction de la force de fermeture appliquée au moule.

La surface active du moule possède un aspect de surface correspondant à l'aspect destiné à être donné à la pièce en sortie de moule. De manière avantageuse dans une variante de réalisation, la surface active présente un poli optique de 0,02 à 4 µm, de préférence d'au plus 1 µm.

Par conséquent, le procédé de l'invention fournit de nombreux avantages :
- allégement de la pièce ;
- homogénéité d'aspect de surface;
- surtout une absence d'effet de givrage ;
- pièce autorisée à présenter des variations d'épaisseur sans présence de retassures ;
- amélioration d'aspect par rapport à un procédé de moulage usuel, fournissant si besoin un aspect lisse et brillant ;
- mise en oeuvre à partir de toutes matières thermoplastiques ;
- étape unique et directe de moulage ;
- liberté de conception de pièces, en raison de la suppression des défauts liés à l'injection traditionnelle ;
- possibilité d'augmenter l'épaisseur d'une pièce en réalisant une décompression du moule (après l'injection), c'est-à-dire en laissant entrouvert le moule au niveau de son plan de joint ;
- possibilité de fabriquer des pièces en élastomère présentant une souplesse tactile améliorée, également en laissant entrouvert le moule au niveau de son plan de joint.

La pièce obtenue par le procédé de l'invention présente une pellicule ou peau de matière plastique pleine de quelques microns d'épaisseur qui est esthétique et reproduit l'état de surface de la surface active chauffée du moule.

En effet, si la surface active du moule est dépourvue de défaut, la surface de la pièce obtenue est extrêmement lisse et présente une brillance élevée. En particulier, la pièce obtenue à partir d'ABS-PC en tant que matière plastique permet de présenter une surface dont la rugosité Ra (mesurée par un rugosimètre du commerce) est inférieure à 0,05 µm. Cette caractéristique est très fortement avantageuse lorsqu'il est souhaité de chromer ultérieurement la surface, le procédé de chromage exigeant une surface extrêmement lisse.

Toujours à partir d'ABS-PC, le procédé fournit une pièce dont une partie au moins de sa surface, celle ayant été en contact avec la surface active chauffée du moule, présente une brillance supérieure à 70 UB, voire même supérieure à 90 UB.

La mesure de la brillance est réalisée par un brillancemètre du commerce sur la base d'un angle d'illumination de 60°.

A cette fin, la surface active du moule possède en particulier un poli optique de 0,02 à 4 µm. D'excellents résultats de brillance sont obtenus avec un poli de1 µm, voire de préférence en dessous de 1 µm.

En outre, cette caractéristique de poli est très fortement avantageuse lorsqu'il est souhaité de chromer ou de vernir ultérieurement la surface de la pièce, le procédé de chromage exigeant une surface extrêmement lisse.

Enfin, à partir d'un même moule, il est possible de donner à une pièce des zones d'aspect de surface différent en gardant toujours pour chaque zone cette homogénéité de rendu de couleur et dépourvue d'effet de givrage, par exemple une zone brillante et une zone plus mate avec un aspect granuleux. L'aspect granuleux est obtenu par la micro-structuration de la surface active du moule.

Par conséquent, la surface active du moule possède un état de surface lié à la finition souhaitée de la pièce, le procédé de l'invention permettant de reproduire parfaitement l'empreinte du moule sur la pièce selon une homogénéité d'aspect, en particulier sans effet de givrage, et avec une surface homogène lisse ou micro-structurée.

La pièce obtenue ne nécessite pas d'étapes supplémentaires de finition de surface car elle est dépourvue de l'effet de givrage. Toutefois, elle peut subir selon la destination, des compléments de finition pour compléter son esthétique.

Par exemple, la pièce peut être décorée, par ajout de vernis, décorée par gravure, surmoulée par une autre matière, notamment transparente.

Par conséquent par le procédé de l'invention, les inventeurs ont mis en évidence que de manière inattendue en contrôlant le gradient de température au niveau de la surface active chauffée du moule, en permettant à une partie du gaz d'être évacué au niveau au moins de la surface active du moule, et éventuellement en diminuant fortement la pression à l'intérieur de la cavité du moule, l'aspect de la surface de la pièce qui a été en regard de la surface active du moule, est fortement améliorée par rapport aux techniques de moulage par injection de l'état de la technique à partir d'une matière moussée, procurant un aspect homogène sans effet de givrage. Une pièce en matière plastique moussée obtenue par le procédé de l'invention comporte au moins une partie de sa surface présentant une homogénéité d'aspect sans effet de givrage.

On entend par procédé « direct », un procédé de moulage :
- qui correspond à une injection de matière dans un moule, l'empreinte du moule étant nue et dépourvue de tout autre matériau qui aurait été préalablement moulé et constituerait une coque pour couvrir l'effet de givrage ; et/ou
- qui comprendrait en sortie de moule une étape supplémentaire visant à recouvrir l'aspect de givrage.

Par le procédé de l'invention, la pièce présente un aspect de surface homogène et dépourvue d'effet de givrage.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en coupe et de côté d'un dispositif de mise en oeuvre du procédé de moulage de l'invention;
- La figure 2 illustre le moule de la figure 1, après injection et remplissage de la matière ;
- La figure 3 est une vue de dessus de la matrice du moule pourvue de la surface active et de moyens d'évacuation des gaz;
- La figure 4 est une variante de la figure 3 et montrant la matière injectée répartie dans le moule ;
- La figure 5 est une vue de détail en perspective de la figure 3 d'évents en tant que moyens d'évacuation du gaz du matériau moussé ;
- Les figures 6 et 7 illustrent des vues de dessus de parties de pièces en matière plastique moussée, obtenues respectivement par le procédé de l'invention et un procédé traditionnel de moulage par injection ;
- La figure 8 illustre les courbes d'un cycle de moulage selon respectivement le procédé de l'invention et un procédé traditionnel.

Le procédé de fabrication de l'invention vise à fournir par moulage par injection des pièces à base de matière thermoplastique moussée et dont l'aspect de surface d'au moins l'une des faces est parfaitement homogène en couleur et en rugosité, et présente les mêmes caractéristiques de surface de la partie du moule, dite surface active chauffée, contre laquelle la matière a été en contact lors de l'injection et du moulage.

Ce procédé fournit directement sans étape supplémentaire une homogénéité d'aspect de surface et de couleur, sans effet de givrage.

En fonction du rendu visé selon l'utilisation ultérieure des pièces, la surface active de l'empreinte du moule sera usinée pour reproduire l'aspect de surface souhaité sur la pièce.

Selon l'invention, le procédé comporte les étapes suivantes usuelles du moulage par injection :
- préparation d'une matière moussée chauffée ;
- injection de la matière moussée dans un moule chauffé ;
- refroidissement du moule,
- éjection de la pièce hors du moule.

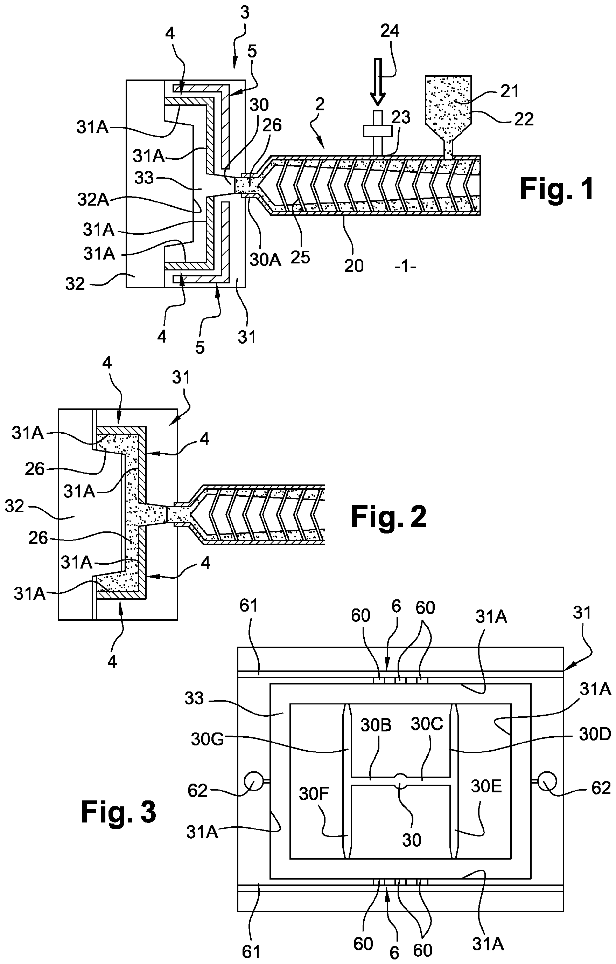

La mise en oeuvre du procédé est réalisée à partir du dispositif 1 illustré schématiquement sur la figure 1.

Le dispositif 1 comporte un système 2 de préparation d'une matière moussée, un moule 3, des moyens de chauffage 4 du moule 2, et des moyens de refroidissement 5 dudit moule.

Le système 2 de préparation d'une matière moussée comporte de manière connue un fourreau 20 chauffé dans lequel est injecté de la matière plastique 21 à partir d'une trémie 22.

Tel qu'illustré à titre d'exemple, la matière moussée 26 est obtenue en ajoutant dans le fourreau 20 du gaz 24 via au moins une entrée 23.

Le fourreau 20 est d'axe longitudinal horizontal et comprend en son intérieur une vis 25 d'amenée de la matière moussée jusqu'à l'entrée 30 du moule.

Le moule 3 comporte une empreinte formée d'une matrice 31 et d'un poinçon 32 qui associés, délimitent par leurs parois intérieures 31 A et 32A, une cavité 33 représentant le négatif tridimensionnel de la pièce à obtenir. Dans ce modèle de moule, le poinçon 32 est mobile, tandis que la matrice est fixe et coopère par l'entrée 30 avec la buse d'injection 30A connectée à l'une des extrémités distales du fourreau 20.

Est représentée sur la figure qu'une seule entrée 30 (point) d'injection. Bien entendu, plusieurs points d'injection peuvent être prévus.

La matière moussée 26 est injectée via l'entrée 30 qui est obturée dès l'injection terminée.

La figure 3 illustre une vue de dessus de la matrice. Est visible l'entrée 30 qui coopère avec des canaux 30B à 30G de distribution de la matière dans la cavité 33 se présentant ici sous forme d'un cadre.

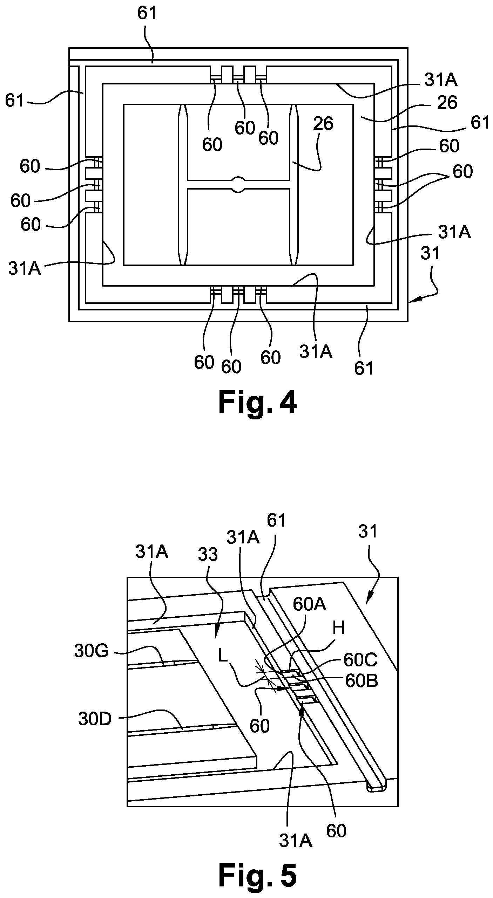

La matière moussée 26 lors de l'injection et après l'injection se répand dans la cavité 33 jusqu'à l'occuper dans sa totalité tel qu'illustré sur les figures 2 et 4.

Dans l'exemple représenté, seules les parois 31 A de la matrice sont contrôlées et régulées en température selon le procédé de l'invention, car seule la surface de la pièce qui aura été en contact avec ces dites parois 31 A est destinée à présenter l'homogénéité d'aspect souhaité.

Ainsi, seules les parois intérieures 31 A de la matrice correspondent à la surface active chauffée selon le procédé de l'invention. Néanmoins, en fonction des zones d'homogénéité d'aspect à réaliser sur la pièce moulée, on adaptera les moyens de mise oeuvre du procédé de l'invention à d'autres parties du moule, par exemple aussi le poinçon.

Selon l'invention, les moyens de mise en oeuvre du procédé de l'invention comportent :
- les moyens de chauffage 4 du moule 2 à haute température (figures 1 et 2), et notamment leurs moyens de régulation et de contrôle non illustrés,
- des moyens d'évacuation 6 d'une partie du gaz contenue dans le matériau moussé 26 destiné à former la pièce moulée, certains moyens étant illustrés en regard des figures 3 et 4 ;
- éventuellement, des moyens de mise sous vide de l'intérieur du moule (non illustrés) de manière à abaisser la pression.

Selon l'invention, les moyens de chauffage 4 et leurs moyens de régulation et de contrôle sont aptes à fournir une répartition homogène de la chaleur au niveau de la surface active 31 A de sorte que la surface active 31 A ne comporte aucune zone présentant un gradient de température avec une autre zone de ladite surface qui ne soit d'au plus 20°C, en particulier d'au plus 10°C, de préférence d'au plus 5°C.

Les moyens de chauffage 4 sont de préférence des moyens de chauffage par induction. Tels qu'illustrés schématiquement sur la figure 2, ils sont disposés à l'intérieur de la paroi du moule en regard de la surface active 31 A de façon que toute la matière 26 en cours d'injection et de répartition dans la cavité 33 soit en contact avec la surface active chauffée 31 A de la matrice, la température de ladite surface active étant supérieure à la température de ramollissement en particulier Vicat de la matière lors de cette répartition de matière.

La répartition et l'emplacement des moyens de chauffage sont avantageusement adaptés pour chauffer rapidement, contrôler efficacement les gradients de température d'une zone à l'autre de la surface active sans pénaliser ultérieurement l'action des moyens de refroidissement. En particulier, ils autorisent une diminution rapide de la température du moule dès qu'ils sont stoppés.

La mise sous vide de la cavité 33 du moule est réalisée par des moyens d'aspiration du type connu. De préférence, la pression résiduelle à l'intérieur de la cavité est de l'ordre de 0,2 à 0,5 bar.

Les moyens d'évacuation 6 d'une partie du gaz du matériau moussé sont nécessairement agencés au niveau de la surface active du moule. En regard des figures 3 à 5, les moyens d'évacuation 6 agencés au niveau de la surface active du moule comprennent des évents 60. Les évents sont disposés dans la paroi du moule au niveau de la surface active 31 A et connectés à des conduits d'évacuation 61 traversant l'épaisseur du moule et débouchant sur l'extérieur.

Ces évents constituent des filtres assurant l'échappement du gaz contenu dans la matière moussée 26, tout en empêchant le passage de la matière plastique

En regard de la figure 4, les évents 60 sont répartis de manière régulière à la périphérie de la surface active 31. Ils sont par exemple groupés, ici tels qu'illustrés sur la vue de détail de la figure 5, en étant distants de 20 mm. De plus, un ou des évents sont au moins disposés en regard d'une zone destinée à former la ligne de jonction de deux fronts de matière, constituant sur le produit fini une ligne nommée la ligne de soudure.

En regard de la figure 5, chaque évent 6 comporte un orifice 60A de communication avec la cavité 33, un corps ou canal d'écoulement 60B qui débouche par une sortie 60C dans un canal d'évacuation 61.

L'orifice 60A d'un évent présente notamment une hauteur H de 0,02 mm empêchant ainsi le passage de la matière 26. L'évent s'étend par exemple sur une largeur L de 5 mm.

En outre, le procédé peut comporter une étape durant laquelle la pression exercée par le poinçon mobile 32 sur la matrice 31 est réduite de manière significative durant le temps de remplissage de la matière dans la cavité, réduite de l'ordre de 60% par rapport à la pression exercée en moulage conventionnel. Cela permet au moule de s'entrouvrir légèrement pour autoriser l'échappement d'une grande partie des gaz à l'extérieur du moule. Selon cette variante, l'ouverture légère du moule constitue des moyens complémentaires d'évacuation qui s'ajoutent aux moyens associés à la surface active du moule.

Dans une autre variante (figure 3), de manière combinée aux évents 60 et éventuellement avec l'ouverture du moule, les moyens d'évacuation 6 comprennent des zones supplémentaires 62 de répartition de la matière dans la cavité du moule. Ces zones supplémentaires sont des zones dites de fin de remplissage dans lesquelles la matière se répand en dernier dans l'empreinte.

Ces zones supplémentaires 62 sont agencées dans la cavité 33 de manière opposée au(x) point(s) d'injection. Leur disposition est étudiée afin de correspondre aux emplacements pour lesquels la matière se loge en dernier lors de la répartition de la matière dans l'empreinte.

De manière inattendue, les inventeurs ont mis en évidence que la température homogène au niveau de la surface active 31 A permet au gaz de la matière moussée de continuer à se diluer dans le coeur de la matière et de se propager de manière homogène. Quant au gaz arrivant en contact de ladite surface active, il s'échappe par les évents 60. Lorsque la matière refroidit, le gaz, ayant atteint l'interface de la surface extérieure de la future pièce moulée et de la surface active du moule, ne reste pas emprisonné puisqu'il a pu s'échapper, générant en surface extérieure de la matière moulée une pellicule ou peau de matière pleine et non alvéolée et sans effet de givrage.

Les zones de fin de remplissage permettent également une évacuation d'une partie du gaz de la matière en cours de moulage.

En fin de répartition de la matière dans la cavité du moule, le moule est refroidi par les moyens de refroidissement 5 du type connu en soi, pour stopper le processus d'expansion de la matière alvéolée dans la cavité et figer la matière plastique afin d'assurer le démoulage.

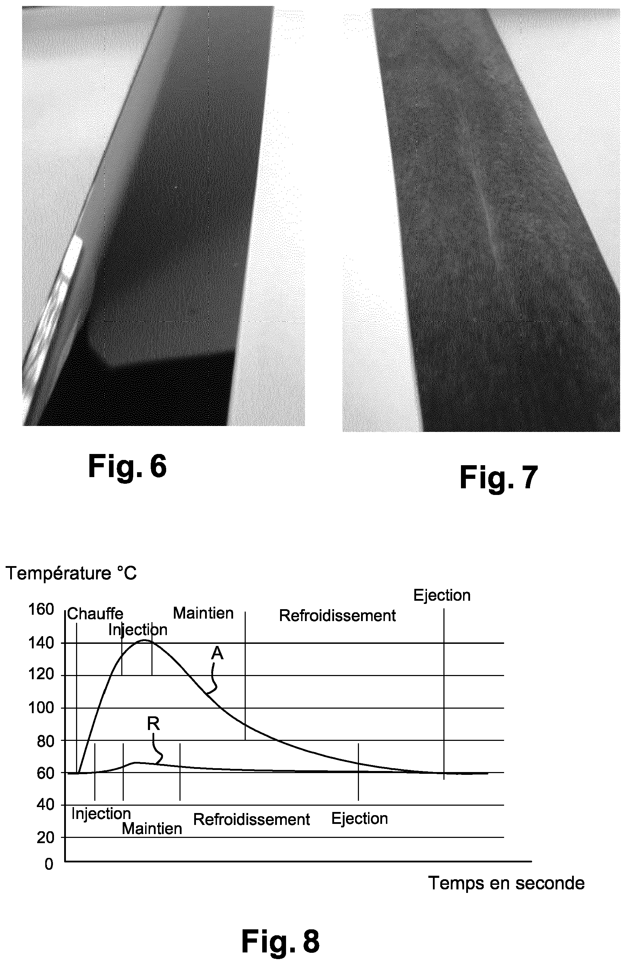

Sont ci-après commentées une pièce en matériau moussé, dite pièce de l'invention, illustrée sur la figure 6 et obtenue par le procédé de l'invention, et une pièce de référence illustrée sur la figure 7 obtenue par moulage par injection classique. La matière plastique moussé injectée est la même pour les deux pièces, de l'ABS-PC (même proportions de matériaux ABS, PC et gaz)

L'ABS-PC possède une température de ramollissement Vicat compris entre 100 et 130°C.

Les principales différences entre les deux procédés consistent en la température de chauffe de la surface active et pour le procédé traditionnel l'absence de moyens d'évacuation des gaz au niveau de la surface active.

Par le procédé traditionnel, la température de la surface active est de 60°C (bien en dessous de la température de ramollissement en particulier Vicat du matériau), tandis qu'elle est de 140°C pour le procédé de l'invention (au-dessus de la température de ramollissement Vicat de la matière injectée).

La figure 8 illustre plus particulièrement le cycle de moulage de la pièce en montrant la courbe de température de la surface active en fonction du temps selon les deux procédés respectifs, celui de l'invention correspondant à la courbe A et celui traditionnel correspondant à la courbe R. Le temps d'éjection pour les deux pièces depuis l'injection est inférieur à une minute. Ces courbes illustrent qu'un temps de chauffe est nécessaire pour le procédé de l'invention avant l'injection et que la température de chauffe au moment de l'injection (environ 140 °C) est bien plus élevée pour le procédé de l'invention (une augmentation de température de 130 % par rapport à la température du procédé usuel qui est de l'ordre de 60°C).

La pièce obtenue par le procédé usuel (pièce de référence) selon le cycle R de la figure 8 présente en regard de la figure 7 un effet de givrage que ne présente pas la pièce de la figure 6 obtenue par le procédé de l'invention selon le cycle A de la figure 8.

En outre, avec la même surface active du moule, un poli optique de 1 µm, la brillance obtenue est totalement différente. Elle est d'ailleurs particulièrement visible sur la pièce de l'invention de la figure 6. La brillance est de 98 UB sous illumination à 60°C pour la pièce de l'invention de la figure 6 et de 65 UB pour la pièce de référence de la figure 7.

Par ailleurs, sur la base du même poli de la surface active (1 µm), la rugosité moyenne Ra de la pièce de l'invention est très avantageusement 100 fois moins importante que celle de la pièce de référence :
Rugosité moyenne Ra = 0,02 µm pour la pièce de l'invention
Rugosité moyenne Ra= 2,5 µm pour la pièce de référence.

Enfin, la profondeur de la ligne de soudure (non illustrée), en rappelant que la ligne de soudure correspond à la ligne de jonction de deux fronts de matière, est détectable visuellement pour la pièce de référence car présentant une épaisseur de 3,2 µm (ce qui est rédhibitoire), tandis que la ligne de soudure de la pièce de l'invention n'est que de 0,05 µm. La pièce fournie par le procédé de l'invention présente donc toutes les qualités d'aspect requises en sortie de moule.

## Revendications

1. Procédé de fabrication d'une pièce à base de matière plastique moussée (26), comprenant les étapes de
- préparation d'une matière moussée chauffée (26) ;
- injection de la matière moussée (26) dans un moule (3) chauffé ;
- refroidissement du moule (3),
le moule étant chauffé de façon homogène sur toute sa surface intérieure (31 A), dite surface active chauffée, contre laquelle se plaque la matière (26) injectée destinée à présenter la surface d'homogénéité d'aspect, et la température de la surface active (31 A) du moule (3) lors de l'injection dans le moule étant supérieure à la température de ramollissement de ladite matière (26), le procédé comportant une étape d'évacuation de gaz, l'étape d'évacuation de gaz consiste à évacuer une partie du gaz (24) présent dans la matière moussée (26) lors de l'injection et durant la phase de propagation de la matière (26) dans la totalité de l'empreinte du moule (3), cette évacuation étant au moins réalisée au niveau de la surface active (31 A) du moule (3) via des évents (60) en différents endroits, disposés dans l'épaisseur du moule, communiquant d'une part avec l'intérieur (33) du moule au niveau de la surface active (31 A) et débouchant d'autre part sur l'extérieur, et/ou formés par la paroi constitutive du moule (3) formée d'un matériau microporeux, et via un espace d'ouverture du moule (3) au niveau du plan de joint après injection de la matière et avant refroidissement et avant éjection de la pièce moulée de façon à créer un espace d'ouverture au niveau du plan de joint qui est limité en épaisseur.

2. Procédé selon la revendication 1, **caractérisé en ce que** l'évacuation est réalisée en regard d'au moins une zone destinée à former la ligne de jonction de deux fronts de matière injectée.

3. Procédé selon l'une quelconque des revendications précédentes, **caractérisé en ce que** la température de la surface active (31 A) du moule (3) lors de l'injection dans le moule est supérieure de l'ordre de 5 à 10°C à la température de ramollissement de ladite matière (26).

4. Procédé selon l'une quelconque des revendications précédentes, **caractérisé en ce que** la surface active (31 A) du moule (3) ne présente pas de zones dont le gradient de température avec d'autres zones de la même surface (31 A) soit supérieur à 20°C.

5. Procédé selon l'une quelconque des revendications précédentes, **caractérisé en ce que** la surface active (31 A) du moule (3) ne présente pas de zones dont le gradient de température avec d'autres zones de la même surface (31 A) soit supérieur à 5°C.

6. Procédé selon l'une quelconque des revendications précédentes, **caractérisé en ce que** le chauffage est choisi parmi le chauffage par vapeur ou par eau chaude sur-pressée, l'induction, la haute-fréquence, les cartouches chauffantes, les résistances électriques, l'infrarouge, le laser.

7. Procédé selon l'une quelconque des revendications précédentes, **caractérisé en ce qu'**il comporte une étape de création d'un vide à l'intérieur du moule (3) par aspiration, de façon à engendrer une pression résiduelle à l'intérieur du moule (3) inférieure à 1 bar, de préférence comprise entre 0,2 et 0,5 bar.

8. Procédé selon l'une quelconque des revendications précédentes, **caractérisé en ce que** le refroidissement du moule (3) est obtenu par des moyens de refroidissement par amenée d'eau froide dans les parois, par circulation de liquides réfrigérants ou de gaz frigorifiques ou de matériaux à changement de phase.

9. Procédé selon la revendication précédente, **caractérisé en ce que** le refroidissement de la surface active (31 A) du moule est maîtrisé de façon que le matériau atteigne sa température de solidification en moins d'une minute.

10. Procédé selon l'une quelconque des revendications précédentes, caractérisé en ce la matière moussée (26) est à base d'une ou plusieurs matières thermoplastiques, cristallins ou semi-cristallins, ou amorphes, ou composites pourvues de charges minérales du type talc ou de fibres de renforcement, ou encore élastomères.

11. Dispositif de mise en oeuvre du procédé selon l'une quelconque des revendications précédentes, comportant un moule (3), des moyens d'injection (20) d'une matière, des moyens de chauffage (4), des moyens de refroidissement (3), des moyens d'évacuation (6), les moyens d'injection (20) étant aptes à délivrer de la matière moussée, les moyens de chauffage (4) étant associés au moins à la surface active (31 A) du moule (3) et tels que la température de la surface active (31 A) du moule (3) lors de l'injection dans le moule est supérieure à la température de ramollissement de ladite matière (26), lesmoyens d'évacuation (6) sont destinés à évacuer une partie du gaz (24) de la matière moussée (26) injectée en comprenant des évents (60) en différents endroits et agencés dans l'épaisseur du moule (3) au niveau de la surface active (31 A) communiquant d'une part avec l'intérieur (33) du moule et débouchant d'autre part sur l'extérieur, et/ou formés par la paroi constitutive du moule (3) formée d'un matériau microporeux, et également configuré pour créer un espace d'ouverture au niveau du plan de joint du moule créé avant refroidissement qui est limité en épaisseur.

12. Dispositif selon la revendication précédente, **caractérisé en ce que** les moyens d'évacuation (6) sont au moins disposés en regard d'au moins une zone destinée à former la ligne de jonction de deux fronts de matière (26).

13. Dispositif selon l'une quelconque des revendications 11 à 12, **caractérisé en ce qu'**il comporte des moyens complémentaires d'évacuation des gaz formés de zones de fin de remplissage (62) dans l'empreinte du moule (3).

14. Dispositif selon l'une quelconque des revendications 11 à 13, **caractérisé en ce que** la surface active (31 A) du moule (3) possède un aspect de surface correspondant à l'aspect destiné à être donné à la pièce en sortie de moule, la surface active (31 A) présentant un poli optique de 0,02 à 4 µm.

15. Dispositif selon la revendication précédente, **caractérisé en ce que** la surface active (31 A) du moule présente un poli optique d'au plus 1 µm.

## Patentansprüche

1. Verfahren zur Herstellung eines Bauteils auf der Basis von geschäumtem Kunststoffmaterial (26), aufweisend die Schritte des
- Vorbereitens eines erwärmten, geschäumten Materials (26) ;
- Einspritzens des geschäumten Materials (26) in eine erwärmte Form (3);
- Abkühlens der Form (3),
wobei die Form auf homogene Weise über ihre gesamte innere Fläche (31A) erwärmt wird, wobei die erwärmte, aktive Fläche, an welche sich das eingespritzte Material (26) eng anlegt, dafür vorgesehen ist, die Fläche mit homogenem Erscheinungsbild zu präsentieren, und wobei die Temperatur der aktiven Fläche (31A) der Form (3) beim Einspritzen in die Form größer als die Erweichungstemperatur des Materials (26) ist, wobei das Verfahren einen Schritt des Ableitens von Gas aufweist, wobei der Schritt des Ableitens von Gas darin besteht, einen Teil des in dem geschäumten Material (26) beim Einspritzen und während der Phase des Ausbreitens des Materials (26) im gesamten Formhohlraum (3) vorhandenen Gases (24) abzuleiten, wobei dieses Ableiten zumindest im Bereich der aktiven Fläche (31A) der Form (3) über Entlüftungslöcher (60) an verschiedenen Stellen, welche in der Dicke der Form angeordnet sind und einerseits mit dem Inneren (33) der Form im Bereich der aktiven Fläche (31A) kommunizieren und andererseits in den Außenbereich münden, und/oder welche von der einen Bestandteil der Form (3) bildenden Wand gebildet werden, welche aus einem mikroporösen Material ausgebildet ist, und über einen Öffnungsraum der Form (3) bewerkstelligt wird im Bereich der Trennebene nach Einspritzen des Materials und vor dem Abkühlen und vor dem Auswerfen des geformten Teils, um einen Öffnungsraum im Bereich der Trennebene zu schaffen, welcher in der Dicke begrenzt ist.

2. Verfahren nach Anspruch 1, **dadurch gekennzeichnet, dass** das Ableiten zumindest gegenüber einem Bereich bewerkstelligt wird, welcher dafür vorgesehen ist, die Verbindungslinie zweier Stirnflächen von eingespritztem Material zu bilden.

3. Verfahren nach einem der vorhergehenden Ansprüche, **dadurch gekennzeichnet, dass** die Temperatur der aktiven Fläche (31A) der Form (3) beim Einspritzen in die Form in der Größenordnung von 5 bis 10°C größer ist als die Erweichungstemperatur des Materials (26).

4. Verfahren nach einem der vorhergehenden Ansprüche, **dadurch gekennzeichnet, dass** die aktive Fläche (31A) der Form (3) keine Bereiche aufweist, deren Temperaturgradient mit anderen Bereichen derselben Fläche (31A) größer als 20°C ist.

5. Verfahren nach einem der vorhergehenden Ansprüche, **dadurch gekennzeichnet, dass** die aktive Fläche (31A) der Form (3) keine Bereiche aufweist, deren Temperaturgradient mit anderen Bereichen derselben Fläche (31A) größer als 5°C ist.

6. Verfahren nach einem der vorhergehenden Ansprüche, **dadurch gekennzeichnet, dass** das Erwärmen aus dem Erwärmen durch Dampf oder durch unter Druck stehendes, heißes Wasser, Induktion, Hochfrequenz, Heizkartuschen, elektrischen Widerständen, Infrarot und Laser ausgewählt wird.

7. Verfahren nach einem der vorhergehenden Ansprüche, **dadurch gekennzeichnet, dass** es einen Schritt des Bildens eines Vakuums im Inneren der Form (3) durch Absaugen aufweist, um einen Restdruck im Inneren der Form (3) zu erzeugen, welcher kleiner als 1 bar ist, vorzugsweise zwischen 0,2 und 0,5 bar liegt.

8. Verfahren nach einem der vorhergehenden Ansprüche, **dadurch gekennzeichnet, dass** das Abkühlen der Form (3) durch Kühlmittel, durch Zuführung von kaltem Wasser in die Wände, durch Zirkulieren von flüssigem Kühlmittel oder Kältegasen oder Phasenwechselmaterialien erzielt wird.

9. Verfahren nach dem vorhergehenden Ansprüche, **dadurch gekennzeichnet, dass** das Abkühlen der aktiven Fläche (31A) der Form gesteuert wird, so dass das Material seine Erstarrungstemperatur in weniger als einer Minute erreicht.

10. Verfahren nach einem der vorhergehenden Ansprüche, **dadurch gekennzeichnet, dass** das geschäumte Material (26) auf einem oder mehreren thermoplastischen Materialien basiert, welche kristallin oder halbkristallin oder amorph oder mit Mineralstofffüllungen der Art von Talk oder mit Verstärkungsfasern gemischt oder noch elastomer sind.

11. Vorrichtung zur Durchführung des Verfahrens nach einem der vorhergehenden Ansprüche, aufweisend eine Form (3), Mittel zum Einspritzen (20) eines Materials, Heizmittel (4), Kühlmittel (3), Ableitmittel (6), wobei die Einspritzmittel (20) geeignet sind, geschäumtes Material zu fördern, wobei die Heizmittel (4) mit mindestens der aktiven Fläche (31A) der Form (3) verknüpft sind und zwar derartig, dass die Temperatur der aktiven Fläche (31A) der Form (3) beim Einspritzen in die Form größer als die Erweichungstemperatur des Materials (26) ist, wobei die Ableitmittel (6) dafür vorgesehen sind, einen Teil des Gases (24) des eingespritzten geschäumten Materials (26) abzuleiten, indem sie Entlüftungslöcher (60) an verschiedenen Stellen aufweisen, welche in der Dicke der Form (3) im Bereich der aktiven Fläche (31A) eingerichtet sind und einerseits mit dem Inneren (33) der Form kommunizieren und andererseits in den Außenbereich münden, und/oder von der einen Bestandteil der Form (3) bildenden Wand gebildet werden, welche aus einem mikroporösen Material ausgebildet ist, und ebenfalls dafür konfiguriert ist, einen Öffnungsraum im Bereich der vor dem Abkühlen geschaffenen Trennebene zu schaffen, welche in der Dicke begrenzt ist.

12. Vorrichtung nach dem vorhergehenden Anspruch, **dadurch gekennzeichnet, dass** die Ableitmittel (6) zumindest gegenüber mindestens einem Bereich angeordnet sind, welcher dafür vorgesehen ist, die Verbindungslinie zweier Stirnflächen von Material (26) zu bilden.

13. Vorrichtung nach einem der Ansprüche 11 bis 12, **dadurch gekennzeichnet, dass** sie komplementäre Mittel zum Ableiten der Gase aufweist, welche von Befüllungsendbereichen (62) in dem Formhohlraum (3) gebildet sind.

14. Vorrichtung nach einem der Ansprüche 11 bis 13, **dadurch gekennzeichnet, dass** die aktive Fläche (31A) der Form (3) ein Oberflächenerscheinungsbild besitzt, welches dem Erscheinungsbild entspricht, welches vorgesehen ist, dem fertigen Formteil zu verleihen, wobei die aktive Fläche (31A) einen optischen Glanz von 0,02 bis 4 µm aufweist.

15. Vorrichtung nach dem vorhergehenden Anspruch, **dadurch gekennzeichnet, dass** die aktive Fläche (31A) der Form einen optischen Glanz von höchstens 1 µm aufweist.

## Claims

1. Method for manufacturing a part based on foamed plastic material (26), comprising the steps of
- preparation of a heated foamed material (26);
- injection of the foamed material (26) into a heated mould (3);
- cooling of the mould (3),
the mould being heated uniformly over all of its internal surface (31A), called heated active surface, against which is pressed the injected material (26) intended to exhibit the surface of uniform appearance, and the temperature of the active surface (31A) of the mould (3) upon injection into the mould being greater than the plasticizing temperature of said material (26), the method comprising a gas discharging step, the gas discharging step consists in discharging a part of the gas (24) present in the foamed material (26) upon injection and during the phase of propagation of the material (26) into all of the die of the mould (3), this discharging being at least performed at the level of the active surface (31A) of the mould (3) via vents (60) at different points, arranged in the thickness of the mould, connecting on one side with the interior (33) of the mould at the level of the active surface (31A) and emerging on the other side on the outside, and/or formed by the constituent wall of the mould (3) formed from a microporous material, and via an opening space of the mould (3) at the level of the parting surface after injection of the material and before cooling and before ejection of the moulded part so as to create an opening space at the level of the parting surface which is limited in thickness.

2. Method according to Claim 1, **characterized in that** the discharging is performed opposite at least one zone intended to form the line of joining of two fronts of injected material.

3. Method according to either one of the preceding claims, **characterized in that** the temperature of the active surface (31A) of the mould (3) upon injection into the mould is greater by around 5 to 10°C than the plasticizing temperature of said material (26).

4. Method according to any one of the preceding claims, **characterized in that** the active surface (31A) of the mould (3) does not have any zones whose temperature gradient with other zones of the same surface (31A) is greater than 20°C.

5. Method according to any one of the preceding claims, **characterized in that** the active surface (31A) of the mould (3) does not have any zones whose temperature gradient with other zones of the same surface (31A) is greater than 5°C.

6. Method according to any one of the preceding claims, **characterized in that** the heating is chosen from among steam or pressurized hot water heating, induction heating, high-frequency heating, heating cartridges, electrical resistor heating, infrared heating, laser heating.

7. Method according to any one of the preceding claims, **characterized in that** it comprises a step of creation of a vacuum inside the mould (3) by suction, so as to generate a residual pressure inside the mould (3) less than 1 bar, preferably between 0.2 and 0.5 bar.

8. Method according to any one of the preceding claims, **characterized in that** the cooling of the mould (3) is obtained by cooling means by delivering cold water in the walls, by circulation of refrigerants or refrigerating gasses or phase-change materials.

9. Method according to the preceding claim, **characterized in that** the cooling of the active surface (31A) of the mould is controlled so that the material reaches its solidification temperature in less than one minute.

10. Method according to any one of the preceding claims, **characterized in that** the foamed material (26) is based on one or more thermoplastic materials, crystalline or semi-crystalline, or amorphous, or compounds provided with mineral fillers of talc type or of reinforcing fibres, or even elastomers.

11. Device for implementing the method according to any one of the preceding claims, comprising a mould (3), means for injection (20) of a material, heating means (4), cooling means (3), discharging means (6), the injection means (20) being able to deliver the foamed material, the heating means (4) being associated at least with the active surface (31A) of the mould (3) and such that the temperature of the active surface (31A) of the mould (3) upon injection into the mould is greater than the plasticizing temperature of said material (26), the discharging means (6) are intended to discharge a part of the gas (24) from the injected foamed material (26) by including vents (60) at different points and arranged in the thickness of the mould (3) at the level of the active surface (31A) connecting on one side with the interior (33) of the mould and emerging on the other side on the outside, and/or formed by the constituent wall of the mould (3) formed from a microporous material, and also configured to create an opening space at the level of the parting surface of the mould created before cooling which is limited in thickness.

12. Device according to the preceding claim, **characterized in that** the discharging means (6) are at least arranged opposite at least one zone intended to form the line of joining of two fronts of material (26).

13. Device according to either one of Claims 11 and 12, **characterized in that** it comprises complementary gas discharging means formed by end-of-filling zones (62) in the die of the mould (3).

14. Device according to any one of Claims 11 to 13, **characterized in that** the active surface (31A) of the mould (3) has a surface appearance corresponding to the appearance intended to be given to the part on extraction from the mould, the active surface (31A) exhibiting an optical polish of 0.02 to 4 µm.

15. Device according to the preceding claim, **characterized in that** the active surface (31A) of the mould exhibits an optical polish of at most 1 µm.
